# EUROPÄISCHE PATENTSCHRIFT

(11) **EP 3 245 494 B1**
(45) Veröffentlichungstag und Bekanntmachung des Hinweises auf die Patenterteilung: **08.05.2019**
(21) Anmeldenummer: 15813007.0
(22) Anmeldetag: 11.12.2015
(51) Int. Cl.: G01N 1/22

(54) **ABGASPROBENAHMESYSTEM UND VERFAHREN ZUM BETREIBEN EINES DERARTIGEN ABGASPROBENAHMESYSTEMS**
EXHAUST-GAS SAMPLING SYSTEM, AND METHOD FOR OPERATING AN EXHAUST-GAS SAMPLING SYSTEM OF SAID TYPE
SYSTÈME DE PRÉLÈVEMENT D'ÉCHANTILLONS DE GAZ D'ÉCHAPPEMENT ET PROCÉDÉ POUR FAIRE FONCTIONNER UN SYSTÈME DE CE TYPE

(30) Priorität: 15.01.2015 DE 102015100567
(43) Veröffentlichungstag der Anmeldung: 22.11.2017
(73) Patentinhaber: AVL Emission Test Systems GmbH, 41460 Neuss (DE)
(72) Erfinder: WILLICH, Sascha, 41563 Kaarst (DE); KREFT, DR., Norbert, 40667 Meerbusch (DE); GARTHE, Christopher, 41564 Kaarst (DE)
(74) Vertreter: Patentanwälte ter Smitten Eberlein-Van Hoof Rütten Partnerschaftsgesellschaft mbB
(86) Internationale Anmeldenummer: PCT/EP2015/079424
(87) Internationale Veröffentlichungsnummer: WO 2016/113048

(56) Entgegenhaltungen:
- WO-A1-2013/181145
- US-A1- 2010 000 339

## Beschreibung

Die Erfindung betrifft ein Abgasprobenahmesystem mit einer Hauptförderleitung, einer Hauptdurchsatzpumpe, über welche ein Probengas in der Hauptförderleitung förderbar ist, einem Probengasbeutel, einer Probengasentnahmeleitung, über die die Hauptförderleitung mit einem Probengasbeutel fluidisch verbindbar ist, einem Durchflussregelelement, welches in der Probengasentnahmeleitung angeordnet ist, einem Analysator, der über eine Probengasanalyseleitung mit dem Probengasbeutel verbindbar ist sowie ein Verfahren zum Betreiben eines derartigen Abgasprobenahmesystems, bei dem zur Entnahme von Probengas die Abgasquelle eingeschaltet wird, die Hauptdurchsatzpumpe zur Förderung eines Probengases durch die Hauptförderleitung eingeschaltet wird, der Durchflussregler oder das Schaltventil in der Probengasanalyseleitung geschlossen wird, und im Folgenden zur Abgasanalyse der Durchflussregler oder das Schaltventil in der Probengasanalyseleitung geöffnet wird, das Probengasfördermittel eingeschaltet wird und in dem Analysator das Probengas aus dem Probengasbeutel analysiert wird.

Derartige Abgasprobenahmesysteme sowie die zugehörigen Verfahren zu deren Betrieb sind bekannt und unterliegen gesetzlichen Regelungen, nach denen die Motoren von Kraftfahrzeugen bestimmte Emissionsgrenzwerte nicht überschreiten dürfen, so beispielsweise die ECE-Richtlinie R 83 für den europäischen Raum oder der Code of federal regulations Gesetz Nr.40 für den US-amerikanischen Raum. In diesen Regularien wird neben den Emissionsgrenzwerten auch die Art der Probenahme durch Anlagen mit variabler Verdünnung zur Messung der Emissionen größtenteils geregelt.

Derartige Anlagen sind beispielsweise unter dem Begriff CVS-Anlage (constant volume sampling) bekannt. Bei diesen Anlagen wird dem Abgas immer so viel Luft beigemischt, dass ein weitestgehend konstanter Gesamtvolumenstrom des Luft-Abgas-Gemisches entsteht. Die über diese Anlagen in Beuteln entnommenen Proben werden im Folgenden in einem Analysator bezüglich ihrer Schadstoffanteile analysiert. Insbesondere werden der Kohlendioxid-, der Kohlenmonoxid-, Kohlenwasserstoff- sowie der Stickoxid-Anteil gemessen.

Nach der Analyse verbleibt üblicherweise ein Rest des Probengases in den Probebeuteln. Vor dem Start eines neuen Fahrzyklusses ist es daher erforderlich, die Probenbeutel vollständig zu entleeren. Dies erfolgt üblicherweise über eine Vakuumpumpe, die in einer separaten Evakuierungsleitung angeordnet ist, die zu einem Auslass führt.

Eine derartige Vorrichtung wird beispielsweise in der DE 198 57 955 A1 offenbart. Bei dieser Vorrichtung befinden sich die Probenbeutel in einem druckfesten Behälter, der über ein Unterdruckfördermittel evakuierbar ist. In der Evakuierungsleitung sowie in den Hauptförderleitungen, die zu den Probebeuteln führen, und den zum Analysator führenden Leitungen sind jeweils Ventile angeordnet, über die die Leitungen verschließbar oder freigebbar sind. Während der Füllung der Beutel wird der Behälter einem konstanten Unterdruck ausgesetzt, wodurch eine Kondensation des im Abgas vorhandenen Wasserdampfs vermieden wird. Durch Öffnen der Auslassventile der Probenbeutel werden nach erfolgter Messung durch das Unterdruckfördermittel auch die Probenbeutel vollständig entleert.

Des Weiteren ist aus der WO 2013/181145 A1 ein Abgasanalysesystem bekannt, bei dem mittels einer Hauptdurchsatzpumpe ein Abgas-LuftGemisch durch eine Hauptförderleitung gefördert wird. Von der Hauptförderleitung zweigt eine Probengasentnahmeleitung ab, die zu Abgasbeuteln führt. Diese Probengasentnahmebeutel sind mit einer Evakuierungleitung verbunden, in der eine Förderpumpe angeordnet ist, so dass die Abgasbeutel zwischen den Messungen entleert werden können.

Als Unterdruckfördermittel werden zur Platz- und Kostenreduktion relativ kleine Pumpen mit geringen Fördermengen verwendet. Dies hat zur Folge, dass die Zeit zur Evakuierung und damit die Zeit zwischen zwei zu messenden Fahrzyklen relativ lang ist.

Es stellt sich daher die Aufgabe, ein Abgasprobenahmesystem sowie ein zugehöriges Verfahren zur Verfügung zu stellen, mit denen eine deutlich schnellere Evakuierung erreicht wird, ohne dass ein erhöhter Platzbedarf oder erhöhte Investitions- und Betriebskosten durch Verwendung größerer Pumpen entsteht.

Diese Aufgabe wird durch ein Abgasprobenahmesystem mit den Merkmalen des Hauptanspruchs 1 sowie ein Verfahren zum Betreiben eines derartigen Abgasprobenahmesystems mit den Merkmalen des Hauptanspruchs 13 gelöst.

Dadurch, dass bei dem Abgasprobenahmesystem über eine Evakuierungsleitung eine fluidische Verbindung zwischen der Hauptdurchsatzpumpe und dem mindestens einen Probengasbeutel herstellbar ist und in der Evakuierungsleitung ein Ventil angeordnet ist, über welches die Evakuierungsleitung verschließbar und freigebbar ist, wird erreicht, dass die Hauptdurchsatzpumpe bei der Evakuierung der Beutel zugeschaltet wird. Dieses weist einen deutlich höheren Durchsatz als die sonst zur Evakuierung verwendeten Vakuumpumpen auf, so dass mit Aufschaltung dieser Evakuierungsleitung die Evakuierungszeit deutlich verkürzt wird.

Bezüglich des Verfahrens wird die Abgasprobenahme durchgeführt, indem während der Entnahme von Probengas und während der Abgasanalyse das Ventil in der ersten Evakuierungsleitung geschlossen ist, und zur Evakuierung der Probengasbeutel das Ventil in der Evakuierungsleitung geöffnet wird, während die Hauptdurchsatzpumpe eingeschaltet ist. Entsprechend erfolgt eine schnelle Evakuierung der Probenbeutel. Auch werden keine zusätzlichen Betriebskosten erzeugt, da zu diesem Zeitpunkt üblicherweise die Hauptdurchsatzpumpe ohnehin läuft, um nach Abschalten der Abgasquelle die Hauptförderleitung von Restabgasen vom vorherigen Fahrzyklus zu befreien. Entsprechend wird die Hauptdurchsatzpumpe für die Evakuierung sowohl der Hauptförderleitung als auch der Probenbeutel verwendet.

Entsprechend ist die Hauptdurchsatzpumpe während der Probengasentnahme, der Probengasanalyse und der Evakuierung der Probengasbeutel eingeschaltet. Ein erneutes Hochfahren der Hauptdurchsatzpumpe ist somit nicht erforderlich.

Vorzugsweise mündet die Evakuierungsleitung stromaufwärts der Hauptdurchsatzpumpe in die Hauptförderleitung. Somit kann die Länge der Verbindungsleitung zur Hauptdurchsatzpumpe minimiert werden, da ein Abschnitt der Hauptförderleitung auch zur Evakuierung der Probenbeutel genutzt wird.

In einer bevorzugten Ausführung der Erfindung mündet die Evakuierungsleitung stromabwärts der Probengasentnahmeleitung in die Hauptförderleitung. Somit entsteht keine Belastung der Hauptförderleitung im für die Messungen relevanten Abschnitt der Hauptförderleitung durch das aus den Probebeuteln entnommene Abgas. Die Wirkungen der Spülung der Hauptförderleitung während des zweiten Schritts werden somit nicht beeinflusst.

Die Evakuierungsleitung mündet in einer besonders vorteilhaften Ausführung stromabwärts eines in der Hauptförderleitung angeordneten Durchflussreglers in die Hauptförderleitung. In diesem Bereich zwischen der Düse und der Pumpe kann durch die Pumpe ein für die Evakuierung ausreichender Unterdruck in der Evakuierungsleitung durch die Hauptdurchsatzpumpe erzeugt werden.

Besonders bevorzugt wird dieser Durchflussregler als Venturidüse ausgeführt, die insbesondere überkritisch betrieben wird, um eine proportionale Probenahme zu ermöglichen.

Vorzugsweise ist in der Evakuierungsleitung eine Vakuumpumpe angeordnet. Auf diese Weise kann der Unterdruck in der Evakuierungsleitung erhöht und somit die Evakuierungszeit verringert werden.

In einer weiterführenden vorteilhaften Ausführungsform ist eine erste und eine zweite Evakuierungsleitung mit dem zumindest einen Probengasbeutel fluidisch verbindbar, wobei in der zweiten Evakuierungsleitung die Vakuumpumpe angeordnet ist. Entsprechend erfolgt parallel zur Förderung des Probengases aus den Beuteln durch die Hauptdurchsatzpumpe eine zusätzliche Evakuierung, wodurch die Entleerung der Beutel weiter beschleunigt wird oder eine noch bessere Evakuierung mit höherem erreichbaren Unterdruck ermöglicht wird, wenn die erste Leitung geschlossen wird.

Vorteilhafterweise mündet auch die zweite Evakuierungsleitung in die Hauptförderleitung stromaufwärts der Hauptdurchsatzpumpe. Dies verringert die notwendigen Leitungslängen, unterstützt die Gasförderung der Pumpe und ermöglicht den gemeinsamen Auslass aller Abgas enthaltenden Proben, so dass im Folgenden nicht mehrere parallele Abgasreinigungsmittel, wie Filter oder Katalysatoren verwendet werden müssen, falls eine zusätzliche Reinigung vorhanden ist.

Um ein Durchströmen der zweiten Evakuierungsleitung während der Probenahme und während der Abgasanalyse vollständig verhindern zu können, ist in der zweiten Evakuierungsleitung ein Ventil angeordnet.

Entsprechend ist während der Evakuierung der Probengasbeutel vorteilhafterweise die Vakuumpumpe in der zweiten Evakuierungsleitung eingeschaltet und das Ventil in der zweiten Evakuierungsleitung oder das Ventil im Leitungsabschnitt geöffnet. So wird während des dritten Schrittes eine maximale Durchströmung der zweiten Evakuierungsleitung und somit eine Entleerung der Probenbeutel mit maximaler Geschwindigkeit sichergestellt.

Alternativ Ist es vorteilhaft, wenn die erste Evakuierungsleitung und die zweite Evakuierungsleitung einen gemeinsamen Leitungsabschnitt aufweisen, in dem das Ventil angeordnet ist. Entsprechend muss zur Entleerung der Probebeutel lediglich ein Ventil statt der zwei Ventile in den beiden Evakuierungsleitungen benutzt beziehungsweise geschaltet werden, wodurch Herstell- und Betriebskosten reduziert werden. Allerdings ist es dann auch immer nur möglich, beide Leitungen gemeinsam zu öffnen und zu verschließen.

Zur Sicherstellung einer möglichen Förderung des Probengases aus den Probebeuteln zum Analysator und zusätzlich einer möglichen Absperrung der Probengasanalyseleitung während der Phasen, in denen keine Analysen vorgenommen werden, sind in der Probengasanalyseleitung ein Probengasfördermittel und ein Durchflussregler oder ein Schaltventil angeordnet.

Vorzugsweise weist die Hauptförderleitung einen Lufteinlass mit einem Filter und einen Abgaseinlass auf, der mit einer Abgasquelle verbunden ist. Durch Einstellung des Hauptdurchsatzes kann das Probengas in einem gewünschten Verdünnungsverhältnis zur Probenahme zur Verfügung gestellt werden.

Es wird somit ein Abgasprobenahmesystem sowie ein Verfahren zum Betreiben eines solchen Abgasprobenahmesystems geschaffen, mit denen die Taktzeiten zur Abgasanalyse im Vergleich zu bekannten Ausführungen deutlich reduziert werden können, indem die Evakuierungszeiten der Probenbeutel reduziert werden und mehrere Probenbeutel gleichzeitig evakuiert werden können. Dabei können die Herstell- und Betriebskosten weitgehend unverändert bleiben.

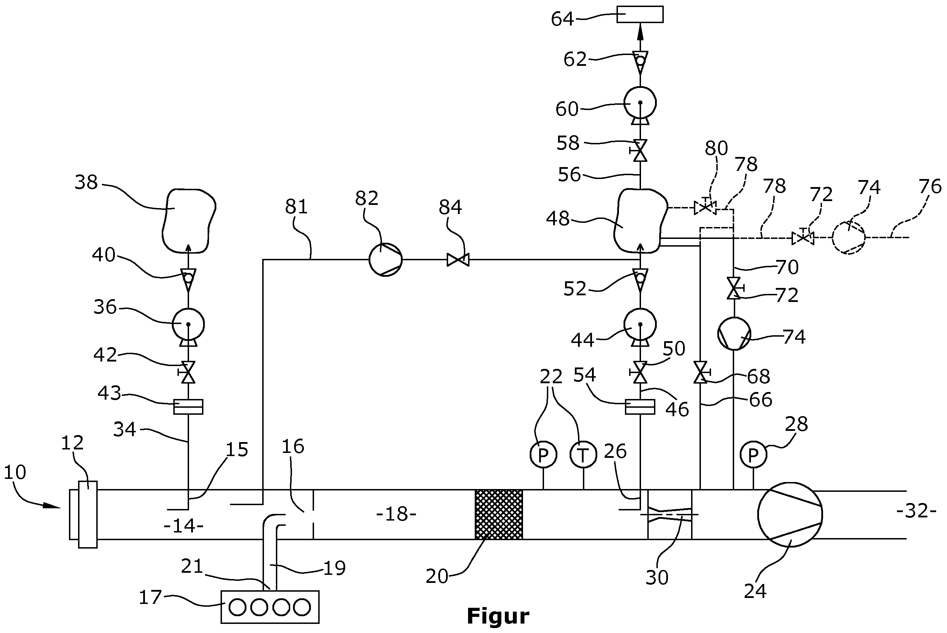

Ein Ausführungsbeispiel eines erfindungsgemäßen Abgasprobenahmesystems ist in der Figur als Prinzipskizze dargestellt und wird nachfolgend ebenso wie das zugehörige Verfahren zur Regelung beschrieben.

Die Figur zeigt eine Prinzipskizze eines erfindungsgemäßen Abgasprobenahmesystems in Form eines Fließschemas.

Das erfindungsgemäße Abgasprobenahmesystem besteht aus einem Lufteinlass 10, an dem ein Luftfilter 12 angeordnet ist. Die Luft gelangt in einen Luftkanal 14, in welchen eine Luftprobenahmesonde 15 ragt, über die kontinuierlich während der Messung Luftproben entnommen werden. Der Luftkanal 14 mündet in eine Mischzone 16, wo die Luft mit Abgas aus einer Abgasquelle 17, die an einen Abgaskanal 19 mündenden Abgaseinlass 21 angeschlossen ist, homogen vermischt wird. Die Mischzone 16 ist der erste Abschnitt einer Hauptförderleitung 18, durch die das Probengas, bestehend aus Luft und Abgas, strömt. In der Hauptförderleitung 18 sind Mittel 20 zur Konditionierung des Probengases, wie beispielsweise ein Wärmetauscher zur Einstellung einer festen Temperatur des Probengases angeordnet. Zusätzlich sind Messmittel 22 zur Temperatur- und Druckmessung unmittelbar vor einer Hauptdurchsatzpumpe 24 angeordnet, über die die Förderung des Probengases durch die Hauptförderleitung 18 erfolgt.

In die Hauptförderleitung 18 ragen eine oder mehrere Probenahmesonden 26, über die eine repräsentative Probe des Probengases entnommen werden kann. Die Hauptdurchsatzpumpe 24 stellt einen ausreichenden Durchsatz in der Hauptförderleitung 18 sicher. Unmittelbar vor der Hauptdurchsatzpumpe 24 ist ein Druckmessgerät 28 angeordnet, über welches der Druck vor der Hauptdurchsatzpumpe gemessen wird. Bei einer Verwendung einer Im überkritischen Bereich betriebenen Venturi-Düse als Durchflussregler 30 in der Hauptförderleitung 18 wird so sichergestellt, dass ein ausreichender Druck zur Sicherstellung eines kritischen Betriebes der vor der Hauptdurchsatzpumpe 24 angeordneten Venturi-Düse bereitgestellt wird, deren Durchfluss nach den Gesetzen der Strömungslehre mit Schallgeschwindigkeit erfolgt und somit in bekannter Weise als Durchflussregler 30 dient. Es sei jedoch darauf hingewiesen, dass die Anlagen auch im unterkritischen Bereich betrieben werden können. Hinter der Hauptdurchsatzpumpe 24 befindet sich der Auslass 32 der Hauptförderleitung 18.

Die über die Luftprobenahmesonde 15 entnommene Luft wird über eine Luftprobeleitung 34 mittels einer Luftförderpumpe 36 in einen Sammelbeutel 38 gefördert. Um diesen Luftstrom konstant und sauber entnehmen zu können sind in der Luftprobeleitung 34 ein mit einem Durchflussmessgerät 40 verbundener Durchflussregler 42 sowie ein zusätzlicher Luftfilter 43 angeordnet.

Über die mindestens eine Probenahmesonde 26 wird das Probengas mittels einer Probengasförderpumpe 44 durch eine Probengasentnahmeleitung 46 in einen oder mehrere Probengasbeutel 48 gefördert. In der Probengasentnahmeleitung 46 ist stromaufwärts der Probengasförderpumpe 44 ein Durchflussregelelement 50, welches entsprechend der Messwerte eines stromabwärts der Probengasförderpumpe 44 angeordneten Durchflussmessgerätes 52 geregelt wird, um die Durchflussmenge bei der Gasentnahme konstant oder proportional zum Gesamtdurchfluss zu halten und eine ausreichende Probengröße am Ende des Fahrzyklusses sicher zu stellen. Das Durchflussregelelement 50 und das Durchflussmessgerät 52 können durch eine weitere Venturidüse gebildet werden, die eine Durchflussmenge erzeugt, welche proportional zum Durchfluss in der Hauptförderleitung ist, da der Druck und die Temperatur an beiden Venturidüsen gleich ist. Des Weiteren befindet sich in der Probengasentnahmeleitung 46 ein Filter 54 zum Abscheiden von Feststoffteilchen.

Der Probengasbeutel 48 ist des Weiteren über eine Probengasanalyseleitung 56, in der ein Durchflussregler oder ein Schaltventil 58 sowie ein Probengasfördermittel 60 und ein weiteres Durchflussmessgerät 62 angeordnet sind, mit einem oder mehreren Analysatoren 64 verbunden. In diesem Analysator 64 werden die Schadstoffe im Abgas, insbesondere die Anteile an Kohlenwasserstoffen, Kohlendioxid, Kohlenmonoxid und Stickoxiden im Abgas bestimmt.

Da für diese Analyse nicht die komplette in den Probengasbeuteln 48 gespeicherte Menge an Probengas benötigt wird, müssen diese nach Durchführung der Abgasanalyse vor einer nächsten Messung vollständig entleert werden. Üblicherweise werden die Probengasbeutel 48 zunächst entleert und anschließend noch einmal gespült, indem über eine Spülgasleitung 81 mittels eines Gebläses 82 stromabwärts des Filters 12 entnommenes Spülgas in die Probengasbeutel 48 gefördert wird und dieses anschließend wieder evakuiert wird. In der Spülgasleitung 81 ist zum Öffnen und Verschließen der Spülgasleitung 81 ein Auf-Zu-Ventil 84 angeordnet.

Erfindungsgemäß weist das Abgasprobenahmesystem zur Evakuierung der Probengasbeutel 48 eine erste Evakuierungsleitung 66 auf, welche stromaufwärts der Hauptdurchsatzpumpe 24 und stromabwärts der Probenahmesonde 26 vom Probengasbeutel 48 in die Hauptförderleitung 18 mündet, so dass eine fluidische Verbindung zwischen dem Probengasbeutel 48 und der Hauptdurchsatzpumpe 24 besteht. Diese fluidische Verbindung kann über ein in der ersten Evakuierungsleitung 66 angeordnetes Ventil 68 verschlossen oder geöffnet werden.

Das dargestellte Abgasprobenahmesystem weist zusätzlich zu dieser ersten Evakuierungsleitung 66 eine weitere, zweite Evakuierungsleitung 70 auf, in der ebenfalls ein Ventil 72 angeordnet ist, so dass die zweite Evakuierungsleitung 70 durch das Ventil ebenfalls geschlossen oder freigegeben werden kann. In dieser zweiten Evakuierungsleitung 70 befindet sich zusätzlich eine Vakuumpumpe 74, durch die zusätzlicher Unterdruck zur Entleerung der Probengasbeutel 48 aufgebracht werden kann, welche jedoch einen deutlich geringeren Maximaldurchsatz aufweist als die Hauptdurchsatzpumpe 24. In der Figur ist mit einer vollen Linie dargestellt, dass die zweite Evakuierungsleitung 70 ebenfalls vor der Hauptdurchsatzpumpe 24 in die Hauptförderleitung 18 mündet. Dieses System birgt den Vorteil, dass das gesamte Abgas über nur einen Auslass nach außen geführt wird. Es ist jedoch auch möglich, wie es durch die gestrichelten Linien dargestellt ist, dass die zweite Evakuierungsleitung 70 zu einem separaten Auslass 76 führt.

Ebenso ist es denkbar, dass beide Evakuierungsleitungen 66, 70 einen gemeinsamen Leitungsabschnitt 78 aufweisen, der sich erst im weiteren Verlauf in die erste Evakuierungsleitung 66 und die zweite Evakuierungsleitung 70 teilt. In diesem Leitungsabschnitt 78 wird dann ein Ventil 80 angeordnet werden, welches das Ventil 72 ersetzt, so dass entweder beide Evakuierungsleitungen 66, 70 gemeinsam freigegeben oder verschlossen werden oder alternativ beide Leitungen 66, 70 über das Ventil 80 verschlossen werden und bei geöffneter zweiter Evakuierungsleitung 70 die erste Evakuierungsleitung 66 über das Ventil 68 geschlossen werden kann.

Das Abgasprobenahmesystem wird so betrieben, dass ein Testzyklus mit dem Anstellen der Abgasquelle 17 beginnt. Zu diesem Zeitpunkt fördert die Hauptdurchsatzpumpe 24 das Probengas durch die Hauptförderleitung 18. Über die Luftprobenahmesonde 15 wird aus dem Luftkanal 14 ein Probeluftstrom über die Luftprobeleitung 34 mittels der Luftförderpumpe 36 zum Sammelbeutel 38 transportiert. Gleichzeitig wird das Probengas, bestehend aus Abgas und Luft, über eine oder mehrere Probenahmesonden 26 mittels der Probengasförderpumpe 44 durch die Probengasentnahmeleitung 46 zu dem einen oder mehreren Probengasbeuteln 48 gefördert. Diese Probenentnahme, also der entnommene Probengasstrom erfolgt durch die Verwendung der kritischen Venturi-Düsen 30, 50 proportional zum Gesamtvolumenstrom. Das Ventil 68 in der ersten Evakuierungsleitung 66, das Ventil 72 in der zweiten Evakuierungsleitung 70 und der Durchflussregler oder das Schaltventil 58 in der Probengasanalyseleitung 56 sind zu diesem Zeitpunkt geschlossen, so dass kein Probengas aus den Probengasbeuteln 48 entweichen kann. Entsprechend sind auch die Vakuumpumpe 74 und das Probengasfördermittel 60 außer Betrieb.

Mit Beendigung des Testzyklusses wird die Probengasförderpumpe 44 ausgestellt. Zusätzlich wird in diesem zweiten Schritt das Probengasfördermittel 60 angestellt und das Schaltventil 58 geöffnet, so dass Probengas aus den Probengasbeuteln 48 durch die Probengasanalyseleitung 56 zum Analysator 64 gefördert wird. Während dieses Prozesses läuft die Hauptdurchsatzpumpe 24 weiter, um in der Hauptförderleitung 18 vorhandenes Restabgas abzusaugen.

Nachdem alle Analysen durchgeführt sind, müssen im Folgenden die Probengasbeutel 48 in einem dritten Schritt vollständig entleert werden. Hierzu werden die beiden Ventile 68, 72 geöffnet und die Vakuumpumpe 74 eingeschaltet, so dass über die beiden Evakuierungsleitungen 66, 70 das in den Probengasbeuteln 48 vorhandene Restprobengas zurück in die Hauptförderleitung 18 strömt. Dabei wird in der zweiten Evakuierungsleitung 70 durch die Vakuumpumpe 74 und in der ersten Evakuierungsleitung 66 durch die weiterhin laufende Hauptdurchsatzpumpe 24 das notwendige Druckgefälle erzeugt. Die Hauptdurchsatzpumpe 24 zieht zu diesem Zeitpunkt zwar weiterhin Luft über den Luftfilter 12 in die Hauptförderleitung 18, jedoch wird insbesondere durch die zwischen Luftfilter und Hauptdurchsatzpumpe sowie vor dem Einlass der Evakuierungsleitungen 66, 70 in den Hauptförderkanal 18 angeordnete Venturidüse 50 auch ein ausreichendes Druckgefälle über die Evakuierungsleitung 66 erzeugt, insbesondere da die Förderrate der Hauptdurchsatzpumpe 24 ein Vielfaches der sonst verwendeten Vakuumpumpen beträgt. Nach dieser Evakuierung werden die Probengasbeutel 48 üblicherweise noch einmal über die Leitung 81 gespült und anschließend erneut evakuiert. Selbstverständlich ist es auch möglich, die Sammelbeutel 38 ebenfalls mit der Hauptförderleitung 18 zu verbinden und auf die gleiche Weise wie die Probengasbeutel 48 zu evakuieren. Hierzu können entweder direkt zur Hauptförderleitung 18 führende separate Leitungen mit den entsprechenden Ventilen vorgesehen werden oder die Sammelbeutel 38 mit einer oder beiden der Evakuierungsleitungen 66, 70, 78 fluidisch verbunden werden.

Mit diesem System und dem zugehörigen Verfahren wird somit eine deutlich verkürzte Evakuierungszeit zur Entleerung der Probengasbeutel erreicht, ohne dass zusätzliche Fördermittel benötigt würden. Die Konstruktionsänderungen sind somit weitestgehend kostenneutral durchzuführen, insbesondere wenn auf die zusätzliche Vakuumpumpe verzichtet wird, können gegebenenfalls sogar Kosten reduziert werden. Die Betriebskosten werden unabhängig davon, ob eine oder zwei Evakuierungsleitungen verwendet werden, reduziert, da die Zeit zur Entleerung der Beutel verringert wird und somit die Vakuumpumpe eine geringere Zeit laufen muss.

Es sollte deutlich sein, dass innerhalb des Schutzbereiches der Hauptansprüche verschiedene Modifikationen möglich sind. Insbesondere kann im Vergleich zur beschriebenen Ausführungsform gegebenenfalls vollständig auf eine zweite Evakuierungsleitung verzichtet werden. Auch können die beiden Evakuierungsleitungen abschnittsweise zusammengelegt werden, so dass ein Regelventil entfallen kann. Im Vergleich zur beschriebenen Ausführung werden üblicherweise mehrere Probengasbeutel parallel oder nacheinander gefüllt. Es sei ausdrücklich darauf hingewiesen, dass das erfindungsgemäße Abgasprobenahmesystem und das entsprechende Verfahren nicht auf die Probenahme mit nur einem Beutel beschränkt sind. Üblicherweise sind diese Anlagen mit mehreren Probengasbeuteln und/oder mehreren Probenahmesonden ausgestattet, die dann mit einer entsprechenden Anzahl an Ventilen und Durchflussreglern in bekannter Weise zu versehen sind. Des Weiteren können alle an der Anlage vorhandenen Probenbeutel, die evakuiert werden müssen, insbesondere auch die Luftsammelbeutel, über derartig angeschlossene Evakuierungsleitungen geleert werden.

## Patentansprüche

1. Abgasprobenahmesystem mit
einer Hauptförderleitung (18),
einer Hauptdurchsatzpumpe (24), über welche ein Probengas in der Hauptförderleitung (18) förderbar ist,
einem Probengasbeutel (48),
einer Probengasentnahmeleitung (46), über die die Hauptförderleitung (18) mit dem Probengasbeutel (48) fluidisch verbindbar ist,
einem Durchflussregelelement (50), welches in der Probengasentnahmeleitung (46) angeordnet ist,
einem Analysator (64), der über eine Probengasanalyseleitung (56) mit dem Probengasbeutel (48) verbindbar ist,
**dadurch gekennzeichnet, dass**
über eine Evakuierungsleitung (66; 70; 78) eine fluidische Verbindung zwischen der Hauptdurchsatzpumpe (24) und dem Probengasbeutel (48) herstellbar ist und in der Evakuierungsleitung (66; 70; 78) ein Ventil (68; 80) angeordnet ist, über welches die Evakuierungsleitung (66; 70; 78) verschließbar und freigebbar ist.

2. Abgasprobenahmesystem nach Anspruch 1,
**dadurch gekennzeichnet, dass**
die Evakuierungsleitung (66; 70) stromaufwärts der Hauptdurchsatzpumpe (24) in die Hauptförderleitung (18) mündet.

3. Abgasprobenahmesystem nach einem der Ansprüche 1 oder 2,
**dadurch gekennzeichnet, dass**
die Evakuierungsleitung (66; 70; 78) stromabwärts der Probengasentnahmeleitung (46) in die Hauptförderleitung (18) mündet.

4. Abgasprobenahmesystem nach einem der vorhergehenden Ansprüche,
**dadurch gekennzeichnet, dass**
die Evakuierungsleitung (66; 70; 78) stromabwärts eines in der Hauptförderleitung (18) angeordneten Durchflussreglers (30) in die Hauptförderleitung (18) mündet.

5. Abgasprobenahmesystem nach Anspruch 4,
**dadurch gekennzeichnet, dass**
der Durchflussregler (30) eine Venturidüse ist.

6. Abgasprobenahmesystem nach einem der vorhergehenden Ansprüche,
**dadurch gekennzeichnet, dass**
in der Evakuierungsleitung (66; 70; 78) eine Vakuumpumpe (74) angeordnet ist.

7. Abgasprobenahmesystem nach einem der vorhergehenden Ansprüche,
**dadurch gekennzeichnet, dass**
eine erste Evakuierungsleitung (66; 78) und eine zweite Evakuierungsleitung (70) mit dem Probengasbeutel (48) fluidisch verbindbar sind, wobei in der zweiten Evakuierungsleitung (70) die Vakuumpumpe (74) angeordnet ist.

8. Abgasprobenahmesystem nach Anspruch 7,
**dadurch gekennzeichnet, dass**
die zweite Evakuierungsleitung (70) in die Hauptförderleitung (18) stromaufwärts der Hauptdurchsatzpumpe (24) mündet.

9. Abgasprobenahmesystem nach Anspruch 4 bis 8,
**dadurch gekennzeichnet, dass**
in der zweiten Evakuierungsleitung (70) ein Ventil (72) angeordnet ist.

10. Abgasprobenahmesystem nach einem der Ansprüche 7 bis 9,
**dadurch gekennzeichnet, dass**
die erste Evakuierungsleitung (66) und die zweite Evakuierungsleitung (70) einen gemeinsamen Leitungsabschnitt (78) aufweisen, in dem das Ventil (80) angeordnet ist.

11. Abgasprobenahmesystem nach einem der vorhergehenden Ansprüche,
**dadurch gekennzeichnet, dass**
in der Probengasanalyseleitung (56) ein Probengasfördermittel (60) und ein Durchflussregler oder ein Schaltventil (58) angeordnet sind.

12. Abgasprobenahmesystem nach einem der vorhergehenden Ansprüche,
**dadurch gekennzeichnet, dass**
die Hauptförderleitung (18) einen Lufteinlass (10) und einen Abgaseinlass (21) aufweist, der mit einer Abgasquelle (17) verbunden ist.

13. Verfahren zum Betreiben eines Abgasprobenahmesystems nach einem der vorhergehenden Ansprüche,
bei dem zur Entnahme von Probengas
die Abgasquelle (17) eingeschaltet wird,
die Hauptdurchsatzpumpe (24) zur Förderung eines Probengases durch die Hauptförderleitung (18) eingeschaltet wird,
der Durchflussregler oder das Schaltventil (58) in der Probengasanalyseleitung (56) geschlossen wird,
und im Folgenden zur Abgasanalyse
der Durchflussregler oder das Schaltventil (58) in der Probengasanalyseleitung (56) geöffnet wird,
das Probengasfördermittel (60) eingeschaltet wird und in dem Analysator (64) das Probengas aus dem Probengasbeutel (48) analysiert wird,
**dadurch gekennzeichnet, dass**
während der Entnahme von Probengas und während der Abgasanalyse das Ventil (68; 80) in der ersten Evakuierungsleitung (66) geschlossen ist,
und zur Evakuierung der Probengasbeutel (48) das Ventil (68; 80) in der ersten Evakuierungsleitung (66; 78) geöffnet wird, während die Hauptdurchsatzpumpe (24) eingeschaltet ist.

14. Verfahren nach Anspruch 13,
**dadurch gekennzeichnet, dass**
die Hauptdurchsatzpumpe (24) während der Probengasentnahme, der Probengasanalyse und der Evakuierung der Probengasbeutel (48) eingeschaltet ist.

15. Verfahren nach einem der Ansprüche 13 oder 14,
**dadurch gekennzeichnet, dass**
während der Evakuierung der Probengasbeutel (48) die Vakuumpumpe (74) in der zweiten Evakuierungsleitung (70) eingeschaltet ist und das Ventil (72) in der zweiten Evakuierungsleitung (70) oder das Ventil (80) Im Leitungsabschnitt (78) geöffnet ist.

## Claims

1. An exhaust-gas sampling system comprising
a main conveying line (18),
a main throughput pump (24) configured to convey a sample gas in the main conveying line (18),
a sample gas bag (48),
a sample gas withdrawal line (46) configured to fluidically connect the main conveying line (18) to the sample gas bag (48),
a throughflow control element (50) arranged in the sample gas withdrawal line (46),
an analyzer (64) configured to be connected to the sample gas bag (48) via a sample gas analysis line (56).
**characterized in that**
a fluidic connection can be established between the main throughput pump (24) and the sample gas bag (48) via an evacuation line (66; 70; 78), and that a valve (68; 80) is arranged in the evacuation line (66; 70; 78), the valve being configured to open and close the evacuation line (66; 70; 78).

2. The exhaust-gas sampling system as recited in claim 1, **characterized in that** the evacuation line (66; 70) is configured to enter into the main conveying line (18) upstream of the main throughput pump (24).

3. The exhaust-gas sampling system as recited in one of claims 1 or 2, **characterized in that** the evacuation line (66; 70; 78) is configured to enter into the main conveying line (18) downstream of the sample gas withdrawal line (46).

4. The exhaust-gas sampling system as recited in one of the preceding claims, **characterized in that** the evacuation line (66; 70; 78) is configured to enter into the main conveying line (18) downstream of a throughflow controller (30) arranged in the main conveying line (18).

5. The exhaust-gas sampling system as recited in claim 4, **characterized in that** the throughflow controller (30) is a Venturi nozzle.

6. The exhaust-gas sampling system as recited in one of the preceding claims, **characterized in that** a vacuum pump (74) arranged in the evacuation line (66; 79; 78).

7. The exhaust-gas sampling system as recited in one of the preceding claims, **characterized in that** a first evacuation line (68; 78) and a second evacuation line (70) are each configured to be fluidically connectible to the sample gas bag (46), the vacuum pump (74) being arranged in the second evacuation line (70).

8. The exhaust-gas sampling system as recited in claim 7, **characterized in that** the second evacuation line (70) is configured to enter into the main conveying line (18) upstream of the main throughput pump (24).

9. The exhaust-gas sampling system as recited in one of claims 4 to 8, **characterized in that** a valve (72) is arranged in the second evacuation line (70).

10. The exhaust-gas sampling system as recited in one of claims 7 to 9, **characterized in that** the first evacuation line (66) and the second evacuation line (70) each comprise a common line section (78) in which the valve (80) is arranged.

11. The exhaust-gas sampling system as recited in one of the preceding claims, **characterized in that** a sample gas conveyor (50) and a throughflow controller or a switching valve (58) are arranged in the sample gas analysis line (56).

12. The exhaust-gas sampling system as recited in one of the preceding claims, **characterized in that** the main conveying line (18) comprises an air inlet (10) and an exhaust gas inlet (21), the exhaust gas inlet being connected to an exhaust gas source (17).

13. A method for operating the exhaust-gas sampling system as recited in one of the preceding claims, wherein
for withdrawing sample gas,
the exhaust gas source (17) is switched on,
the main throughput pump (24) is switched on to convey a sample gas through the main conveying line (18),
the throughflow controller or the switching valve (58) in the sample gas analysis line (56) is closed,
and thereafter, for performing a sample gas analysis,
the throughflow controller or the switching valve (58) in the sample gas analysis line (56) is opened,
the sample gas conveyor (60) is switched on,
and the sample gas from the sample gas bag (48) is analyzed in the analyzer (64),
**characterized in that**
during each of the withdrawing of the sample gas and the performing of the sample gas analysis, the valve (68; 80) in the first evacuation line (66) is closed,
and for the evacuation of the sample gas bag (48), the valve (66; 80) in the first evacuation line (66; 78) is opened, while maintaining the main throughput pump (24) in a switched-on state.

14. The method according to claim 13, **characterized in that** during each of the withdrawing of the sample gas, the performing of the sample gas analysis, and the evacuating of the sample gas bags (48), the main throughput pump (24) is maintained in the switched-on state.

15. The method according to one of claims 13 or 14, **characterized in that** during the evacuating of the sample gas bags (48), the vacuum pump (74) in the second evacuation line (70) is switched on and the valve (72) in the second evacuation line (70) or the valve (80) in the line section (78) is opened.

## Revendications

1. Système de prélèvement d'échantillons de gaz d'échappement avec
un conduit de transport principal (18),
une pompe de débit principale (24) par laquelle un gaz échantillon peut être transporté dans le conduit de transport principal (18),
un sachet de gaz échantillon (48),
un conduit de prélèvement de gaz d'échantillon (46) par lequel le conduit de transport principal (18) peut être relié fluidiquement au sachet de gaz échantillon (48),
un élément de réglage d'écoulement (50) disposé dans ledit conduit de prélèvement de gaz d'échantillon (46),
un analyseur (64) apte à être relié au sachet de gaz échantillon (48) par un conduit d'analyse de gaz d'échantillon (56),
**caractérisé en ce que**
une communication fluidique peut être établie entre la pompe de débit principale (24) et le sachet de gaz échantillon (48) par un conduit d'évacuation (66; 70; 78), et qu'une vanne (68; 80) est disposée dans le conduit d'évacuation (66; 70; 78), par laquelle vanne le conduit d'évacuation (66; 70; 78) peut être fermé et libéré.

2. Système de prélèvement d'échantillons de gaz d'échappement selon la revendication 1, **caractérisé en ce que** le conduit d'évacuation (66; 70) s'ouvre dans le conduit de transport principal (18) en amont de la a pompe de débit principale (24).

3. Système de prélèvement d'échantillons de gaz d'échappement selon l'une quelconque des revendications 1 ou 2, **caractérisé en ce que** le conduit d'évacuation (66; 70; 78) s'ouvre dans le conduit de transport principal (18) en aval du conduit de prélèvement de gaz d'échantillon (46).

4. Système de prélèvement d'échantillons de gaz d'échappement selon l'une quelconque des revendications précédentes, **caractérisé en ce que** le conduit d'évacuation (66; 70; 78) s'ouvre dans le conduit de transport principal (18) en aval d'un régulateur d'écoulement (30) disposé dans le conduit de transport principal (18).

5. Système de prélèvement d'échantillons de gaz d'échappement selon la revendication 4, **caractérisé en ce que** le régulateur d'écoulement (30) est une buse Venturi.

6. Système de prélèvement d'échantillons de gaz d'échappement selon l'une quelconque des revendications précédentes, **caractérisé en ce qu'**une pompe à vide (74) est disposée dans le conduit d'évacuation (66; 70; 78).

7. Système de prélèvement d'échantillons de gaz d'échappement selon l'une quelconque des revendications précédentes, **caractérisé en ce qu'**un premier conduit d'évacuation (66; 78) et un deuxième conduit d'évacuation (70) peuvent être relié fluidiquement au sachet de gaz échantillon (48), la pompe à vide (74) étant disposée dans le deuxième conduit d'évacuation (70).

8. Système de prélèvement d'échantillons de gaz d'échappement selon la revendication 7, **caractérisé en ce que** le deuxième conduit d'évacuation (70) s'ouvre dans le conduit de transport principal (18) en amont de la pompe de débit principale (24).

9. Système de prélèvement d'échantillons de gaz d'échappement selon l'une quelconque des revendications 4 à 8, **caractérisé en ce qu'**une vanne (72) est disposée dans le deuxième conduit d'évacuation (70).

10. Système de prélèvement d'échantillons de gaz d'échappement selon l'une quelconque des revendications 7 à 9, caractérisé en ce le premier conduit d'évacuation (66; 78) et le deuxième conduit d'évacuation (70) comprennent une section de conduit (78) commune, dans laquelle la vanne (90) est disposée.

11. Système de prélèvement d'échantillons de gaz d'échappement selon l'une quelconque des revendications précédentes, **caractérisé en ce qu'**un moyen de transport de gaz échantillon (60) et un régulateur d'écoulement ou une vanne de commutation (58) sont disposés dans le conduit d'analyse de gaz d'échantillon (56).

12. Système de prélèvement d'échantillons de gaz d'échappement selon l'une quelconque des revendications précédentes, **caractérisé en ce que** le conduit de transport principal (18) comprend une entrée d'air (10) et une entrée de gaz d'échappement (21), qui est reliée à une source de gaz d'échappement (17).

13. Procédé pour faire fonctionner un système de prélèvement d'échantillons de gaz d'échappement selon l'une quelconque des revendications précédentes,
dans lequel, pour le prélèvement de gaz échantillon,
la source de gaz d'échappement (17) est activée,
la pompe de débit principale (24) est activée pour transporter un gaz échantillon à travers le conduit de transport principal (18),
le régulateur d'écoulement ou la vanne de commutation (58) dans le conduit d'analyse de gaz d'échantillon (56) est fermé,
et puis, pour analyser le gaz d'échappement,
le régulateur d'écoulement ou la vanne de commutation (58) dans le conduit d'analyse de gaz d'échantillon (56) est ouvert,
le moyen de transport de gaz échantillon (60) est activé,
et le gaz échantillon du sachet de gaz échantillon (48) est analysé dans l'analyseur (64),
**caractérisé en ce que**
pendant le prélèvement de gaz d'échantillon et pendant l'analyse du gaz d'échappement, la vanne (68; 80) dans le premier conduit d'évacuation (66) est fermée,
et pour l'évacuation des sachets de gaz échantillon (48), la vanne (66; 80) dans le premier conduit d'évacuation (66; 78) est ouverte, pendant que la pompe de débit principale (24) est activée.

14. Procédé selon la revendication 13, **caractérisé en ce que** la pompe de débit principale (24) est activée pendant le prélèvement de gaz échantillon, l'analyse de gaz échantillon et l'évacuation des sachets de gaz échantillon (48).

15. Procédé selon l'une quelconque des revendications 13 ou 14, **caractérisé en ce que**, pendant l'évacuation des sachets de gaz échantillon (48), la pompe à vide (74) dans le deuxième conduit d'évacuation (70) est activée et la vanne (72) dans le deuxième conduit d'évacuation (70) ou la vanne (80) dans la section de conduit (78) est ouverte.
